# EUROPEAN PATENT APPLICATION

(11) **EP 1 442 994 A1**
(43) Date of publication of application: **04.08.2004**
(21) Application number: 03001804.8
(22) Date of filing: 29.01.2003
(51) Int. Cl.: B65D 47/24, G01F 11/26

(54) **Dispensing closure**

(71) Applicant: MONSANTO EUROPE S.A., B-1150 Brussels (BE); RPC Bramlage GmbH, 49393 Lohne (DE)
(72) Inventor: The designation of the inventor has not yet been filed
(74) Representative: Bosch, Henry

(57) **Abstract**

The invention concerns a dispensing closure comprising:
- a cylinder (7) lodged in a sealing arrangement within the bottle neck (3) and comprising at least one inlet opening (11) at the end (13) directed towards the bottle neck (3), and at least one venting hole (15) at the end (17) directed towards the bottle (5) inside;
- a piston (19) comprising an upper sealing plate (21) and a lower sealing plate (23) linked by an essentially longitudinal shaft (25), said piston being arranged within the cylinder (7) in movable connection along the longitudinal axis of the said cylinder, hence defining a dosing volume delimited by the respective sealing plates (21,23) and the cylinder wall (8);
- said piston (19) further comprising a register (27) rigidly connected with said shaft (25) and being arranged at a distance from the lower sealing plate (23) such as to liberate or close the said inlet opening (11) simultaneously with the lower sealing plate (23), respectively, liberating or closing the venting hole (15);
- a spout element (29) extending the bottle neck (3) and facilitating pouring of liquid flowing out of the dosing cylinder (7);
a spring means (31) maintaining said upper sealing plate (21) in sealing arrangement with said cylinder (7), and allowing for movement of said piston (19) in unsealed position when operated. The closure allows for dosing of a preset volume of liquid.

## Description

The present invention relates to an improved dispensing closure intended to be used on containers for liquid products. More particularly, the improved dispensing closure is adapted for liquid containing containers for residential or domestic use.

The prior art discloses a large number of dispensing closures for different types of products.

As an example, EP-A-0 348 102 discloses a liquid dispensing package which includes a liquid container and a drainback spout fitment fitted within a dispensing opening in a finish at the upper end thereof. A measuring cup is threadably engageable with the fitment and finish to enable closing off of the container. The fitment includes a frustoconical downwardly depending side wall surrounding the spout. A drainback channel between the spout and sidewall drains back drips to a drain opening and hence into the liquid container. According to the drawings, the measuring cup has a generally cylindrical side wall with a radially outwardly depending skirt 62. The interior wall of the skirt comprises a plurality of threads for engagement with corresponding threads on the outer wall of the container finish and of the outer wall of the spout fitment skirt.

EP-A-0 369 560 discloses a dripless closure assembly for a container comprising a body which is seated in the neck of the container and which has a pouring spout. A measuring cup which also functions as a cap is disposed over the pouring spout and has a first threaded outwardly disposed skirt for threaded engagement with the neck of the container. A second skirt inward of the outer skirt and extending into the body is provided for preventing drips reaching the threads.

EP-A-0 275 833 is directed to a plastic closure cap for a container, having a spout element and a cap that may serve as a measuring cup. The spout element forms with a surrounding wall an annular trough around the pouring spout which engages the cup edges when the cup is in closed position. The measuring cap has a threaded annular wall arranged centrally in the bottom of the cap for macthing engagement with the tubular spout.

GB-A-2 150 102 discloses a package for liquids comprising a container with an upwardly extending finish; a transition collar mounted on said finish, said collar having an axially outwardly extending pouring spout, a circumscribing wall with fastening means on its interior surface and drain means; and a measuring cup adapted as a cap with fastening means on its external surface for matching engagement with corresponding fastening means on said transition collar. The open mouth of the cup terminates with a radially outwardly flared lip said to work as drip-prevention when the cap is used as a cap, and as an inner seal in contact with the annular internal wall of the transition collar when the cap is in the closed position. A similar embodiment is disclosed in GB-A-2 238 304. According to this reference, the dispensing closure comprises a two-piece closure including a spout portion which is threaded onto the container neck, and a cap portion which includes a depending collar with shielded threads to prevent their exposure to the contents of the container during pouring, when the cap is used as a measuring cup.

The prior art dispensing closures, while not restricted to a particular use, are generally intended for domestic or residential use with laundry products, such as liquid detergents, softeners, bleach and the like. These prior art closures, however, do not comply with all requirements now imposed on domestic or residential packagings, particularly on packagings that are intended for use with regulated products, such as fertilisers, herbicides, insecticides, and other biocides. Even if not yet imposed by all regulatory authorities, it is nevertheless desirable to provide an improved dispensing closure that combines the main characteristics of the prior art dispensing closures mentioned above, such as the ease of manufacturing, the ease of use, the protection against spilling, the proper sealing, and an easy to use dosing system that protects the user's hands or fingers from contact with the liquid to be poured.

An object of the invention is to provide an improved dispensing closure that does not present the inconveniences of the prior art dispensing closures and that presents advantages over the known dispensing closures.

The dosing system should be easy to make, and should be integrated in the closure to be fastened on the top or neck of a container or bottle. Obviously, the improved closure comprising such a dosing system should be accurate to a level acceptable for dosing of concentrate domestic and residential products in view of dilution in water.

Another object of the present invention is to provide an improved dispensing closure as specified above which is designed in such a way as to comply with regulatory and other requirements, including but not limited to, tamper evidence means and child safety means, while still maintaining the other advantageous and important features of the prior art dispensing closures.

The present invention hence provides a dispensing closure comprising:
- a cylinder lodged in a sealing arrangement within the bottle neck and comprising at least one inlet opening at the end directed towards the bottle neck, and at least one venting hole at the end directed towards the bottle inside;
- a piston comprising an upper sealing plate and a lower sealing plate linked by an essentially longitudinal shaft, said piston being arranged within the cylinder in movable connection along the longitudinal axis of the said cylinder, hence defining a dosing volume delimited by the respective sealing plates and the cylinder walls;
- said piston further comprising a register rigidly connected with said shaft and being arranged at a distance from the lower sealing plate such as to liberate or close the said inlet opening simultaneously with the lower sealing plate, respectively, liberating or closing the venting hole;
- a spout element extending the bottle neck and facilitating pouring of liquid flowing out of the dosing cylinder;
- a spring means maintaining said upper sealing plate in sealing arrangement with said cylinder, and allowing for movement of said piston in unsealed position when operated.

The dispensing closure of the invention can further advantageously be closed by a clack valve mounted on the spout element. In a preferred embodiment, the clack valve is linked to the piston and serves as means for acting on the resilient means, in order to move said piston and hence the upper sealing plate away from the said cylinder.

The dispensing closure of the invention may further be covered by a cap. Preferably said cap is associated with tamper evidence means and child safety means. As will be apparent from more detailed description below, any type of tamper evidence means and/or child safety means can be used. The designer skilled in the art will easily find the best suited means adapted to the relevant design.

The dispensing closure of the invention is rather simple and easy to make. It allows to pour a preset volume (dose) of liquid for further use, for instance a dose of liquid pesticide concentrate for dilution with water prior to use in accordance with recommendations. In addition, it may be designed such as to reduce user's exposure to the content of the bottle. The invention dispensing closure is of reduced overall dimensions and easily fits within a normal bottle neck, allowing for appropriate filling of the relevant bottle.

The invention dispensing closure is rather easy to use: when inverting the bottle in pouring position, the liquid contained in the said bottle flows through the inlet opening into the cylinder. The air initially present in the relevant dosing system can escape through the venting holes arranged in the bottom part of the dosing cylinder, preferably opposite the inlet opening. As soon as the dosing cylinder is filled with liquid entrapped between the upper sealing plate pressed in sealing arrangement by the spring means, the bottom sealing plate and the cylinder walls, the user can place the spring means under strain, hence moving the piston toward the outlet of the container neck, thereby closing the inlet opening of the dosing system with the register, closing the venting holes by the bottom sealing plate and unsealing the upper sealing plate and liberating an opening between the relevant sealing plate and the dosing cylinder to allow flow of the preset volume of liquid.

The advantages of the invention dispensing closure will become even more apparent from the description of preferred embodiments as shown in the attached drawings wherein:
- Figure 1 shows, in a schematic cross-section, a first embodiment of the invention dispensing closure, in closed position;
- Figure 2 is a schematic view of the same embodiment as in Figure 1, but in open pouring condition;
- Figure 3 shows, in a schematic cross-section, another preferred embodiment of a dispensing closure according to the invention;
- Figure 4 is a schematic view of the same dispensing closure as in Figure 3, but in open pouring condition;
- Figure 5 is a perspective view of the piston;
- Figure 6 is a perspective view of the spout element associated with the cylinder; and
- Figure 7 is a schematic view of yet another embodiment of the invention.

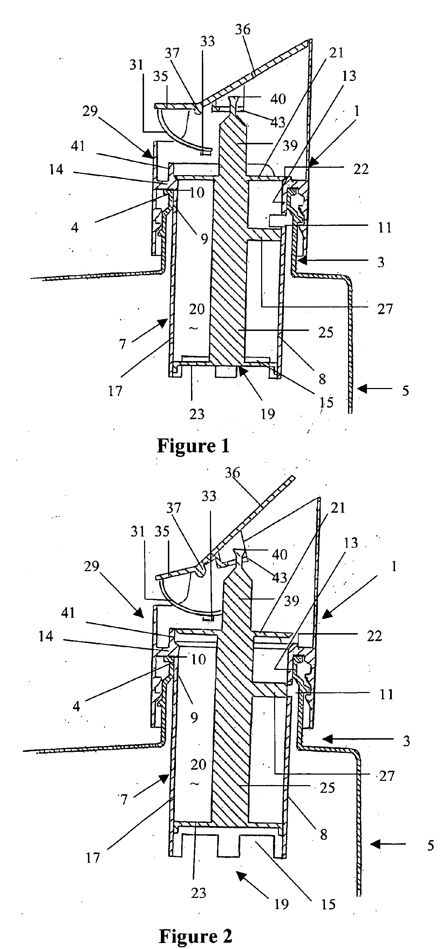

With reference to Figures 1 and 2, the dispensing closure 1 of the invention is mounted essentially within the neck 3 of a container 5 for liquid products. It comprises a cylinder 7 lodged in a sealing arrangement 9 within the neck 3 and provided with at least one inlet opening 11 at the end 13 directed towards the bottle neck 3, and at least one venting hole 15 at the end 17 directed towards the bottle 5 inside. The dispensing closure 1 of the invention further comprises a piston 19 provided with an upper sealing plate 21 and a lower sealing plate 23 linked by an essentially longitudinal axial shaft 25. The said piston 19 is arranged within the cylinder 7 in movable connection along the longitudinal axis of the said cylinder. It defines a dosing volume 20 delimited by the respective sealing plates 21,23 and the cylindrical wall 8. The piston 19 further comprising a register 27 rigidly connected with said shaft 25 and arranged such as to liberate or close the said inlet opening 11. A spout element 29 is fitted on the neck 3, e.g. by threaded engagement therewith, and extends the neck 3 and facilitates pouring of liquid out of the dosing cylinder 7. A spring means 31 holds said upper sealing plate 21 in sealing arrangement 22 with said cylinder 7. The said spring means 31 advantageously acts between a support 33 solid with the spout element 29 and a lever arm 35 balancing in a support 37 provided in the same spout element 29, thereby pressing by way of the opposite end 36 of the lever arm 35 on an extension 39 of the piston shaft 25 so as to hold the piston 7 in such a position that the upper sealing plate 21 closes the cylinder in direction toward the neck 3, that the lower sealing plate 23 liberates the venting hole 15 and that the register 27 liberates the inlet opening 11. When operated by pressure on lever arm 35, the spring means 31 can be placed under strain so as to move the piston 19 in such a position that the inlet opening 11 and the venting hole 15 are closed and the upper sealing plate 21 is unsealed from the cylinder seat 13.

The spout element 29 can be assembled with the neck 3 by threaded engagement or by way of a bayonet connection or by other arrangements known in the art, such as a snap connection or others. It is preferably covered by a cap advantageously provided with suitable tamper evidence means, such as a tear-off ring, and child safety means known in the art.

The dispensing closure of the invention operates as follows: The user inclines the bottle 5, hence allowing liquid contained in the bottle to flow into and fill the dosing cylinder 7 through the inlet opening 11. Air initially contained in the dosing cylinder 7 can escape through the venting hole or holes 15. These openings 11, 15 are advantageously designed such as to allow relatively rapid filling of the dosing cylinder 7. Furthermore, the dimensions of the dosing cylinder 7 are calculated such that when the said dosing cylinder is essentially filled with liquid, it contains a preset volume or dose of liquid which can easily be reproduced substantially accurately at further inversions of the bottle. When the dosing cylinder 7 is essentially filled with liquid, the user may then operate the spring means 31 by pressing on lever arm 35, thus moving the piston 19 as described hereabove, while still maintaining the bottle in inclined pouring position. The liquid contained in the dosing cylinder may now flow out of the cylinder through the opening created by unsealing upper sealing plate 21 from its seat. The register 27 closing the inlet opening 11 and the lower sealing plate 23 closing the venting holes 15, substantially no further liquid contained in the bottle fills up the cylinder 7. The operator may then release the spring means 31 and repeat the operation or place the bottle upright to rest.

It can easily be understood that the cylinder 7 needs to be tightly arranged within the neck 3, in order to avoid leakage. This can be obtained by a cylindrical tight adjustment 9 or suitable sealing means, like a foam ring or similar . Advantageously, the seal 9 can be complemented with a horizontal or annular seal 10 formed by an outward shoulder 14 of the cylinder wall 8 resting on the end 4 of neck 3 and further pressed against said neck end 4 by the spout element screwed on, or otherwise assembled with, the said neck. Suitable sealing may further be obtained by use of a suitable sealing material, like a foam ring or extrusion or co-extrusion of rather resilient material.

The sealing between the upper sealing plate 21 and the cylinder 7 is also essential in order to avoid leakage of the whole assembly. Suitable sealing is obtained by appropriate spring means pressure advantageously combined with suitable design of sealing seat and/or sealing means, like a foam ring or similar means.

The sealing between the bottom sealing plate 23 and the cylinder 7 and/or between the register and the cylinder wall 8 do not need to be as tight as described in the previous paragraphs. While closure of passage should advantageously be obtained, a minor leakage mostly does not constitute a major problem.

In the alternative, the cylinder 7 can be made a single piece with the spout element 29, and the advantageous sealing is attained by appropriate pressure of the combined spout-cylinder 29-7 on the neck end 4.

The movement of the piston 19 is advantageously guided by the lower sealing plate 23 moving within the cylinder 7. It may further be guided by additional guides provided on the shaft 25. In a preferred embodiment, it is further guided by the upper sealing plate 21 sliding in a guiding skirt 41 which extends the cylinder wall 8 towards the pouring opening of the spout element 29. Said guiding skirt is provided with an opening allowing the pouring of liquid in correspondence with the orientation of the pouring spout.

The above description, for ease of manufacturing, advantageously refers to an essentially circular section of cylinder 7 and sealing plates 21,23; as can be easily understood, one may also provide square or polygonal sections.

In a preferred embodiment, the lever arm 35,36 pivoting in support 37 of the spout element forms a clack valve that closes the spout element 29. As will be apparent from the description and Figures, the connection of the lever arm to the piston should be a relatively loose connection, such as a pin 40 extending the shaft extension 39 engaging into a fork 43 arranged under the arm 36 of the lever 35,36.

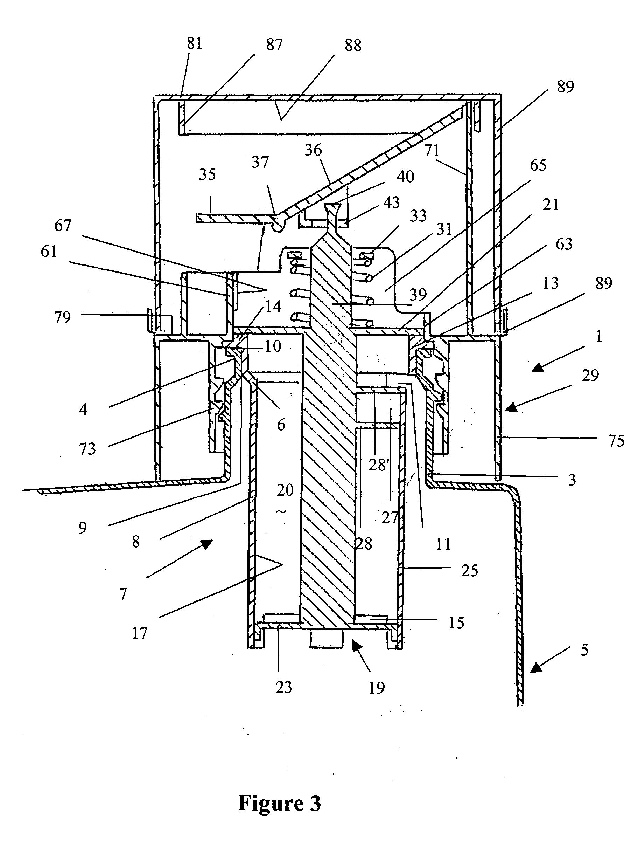

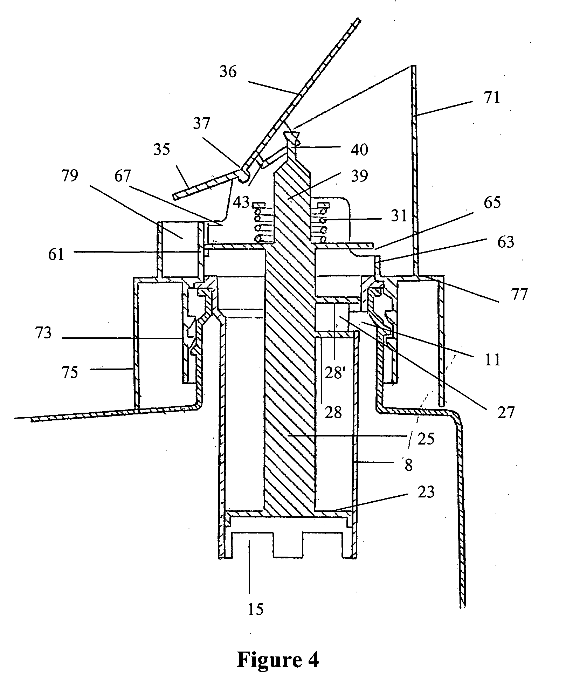

Figures 3 and 4 show another preferred embodiment of the invention, operating similarly. In the Figures, the same reference numerals have been used to designate the same or similar elements.

As in the previous embodiment, the dosing system of the invention comprises a cylinder 7 adjusted or otherwise sealingly arranged within the bottle neck 3. The sealing between the cylinder 7 and the neck can be obtained by a combination of a vertical or cylindrical seal 9 with an annular seal arranged between an outward shoulder 14 of the end of the cylinder 7, extending over the end 4 of the neck 3. In accordance with the present embodiment, the cylinder wall 8 comprises a conical section 6 directed toward the bottle inside, at the end 13 close to the bottle neck 3. This conical section is advantageously provided with the inlet opening 11. This design allows an easier molding by injection of the relevant element if made out of synthetic material. The diameter reduction thus created is in the order of magnitude of the cylinder wall thickness. The other end 17 of the cylinder 7 shows venting holes 15.

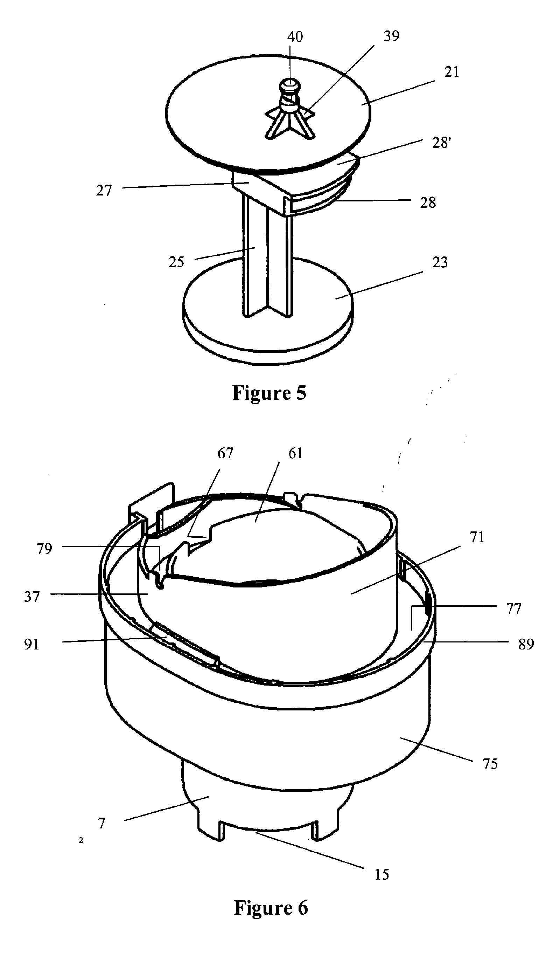

The dispensing closure further comprises a piston 19 (see Figure 5) with an upper sealing plate 21, a lower sealing plate 23 and a register 27 linked together by a shaft 25. The shaft can be of a circular cross-section or of any other suitable, easy-to-mold cross-section, like an x-shape or other. According to the present embodiment and for ease of manufacturing, the register 27 consists in a chamber defining approximately an angular sector which is designed such as to encompass the inlet opening 11 in closed position. The inlet opening 11 being arranged in the conical section 6 of the cylinder, the register 27 is advantageously designed such that its upper wall 28' slides in the part of the cylinder 7 having a larger diameter, i.e. end 13, while its lower wall 28 slides in the cylinder 7 part of slightly reduced diameter; wall 28' hence is of slightly higher diameter than wall 28. Advantageously, lateral guides are provided for on the internal surface of the cylinder wall 17, on each side of the register, that prevent the piston 19 from rotating on its axis and simultaneously tightly closes the inlet opening in association with the register 27.

In this embodiment again, a spout element 29 (see also Figure 6) is fitted on the neck 3, e.g. by threaded engagement designed such as to also press in a sealing arrangement shoulder 14 on neck end 4. The spout element 29 can also be made integral part with the cylinder 7, as per Figure 6. A helicoidal spring 31 arranged between a support 33 solid with the spout element and the upper sealing plate 21 maintains said sealing plate 21 under pressure against its seat, preferably against the end rim of the cylinder 7, in a sealing arrangement known per se, such as a co-molded ring out of more resilient material or any other means known to person skilled in the art. In order to open the dosing cylinder in view of pouring of the liquid dose, the user can exert pressure on arm 35 of the lever 35,36 which is pivoted in support 37 solid with the spout element. Arm 36 then withdraws the upper sealing plate 21 from its seat and the register 27 and venting holes 15 are simultaneously closed.

In a preferred embodiment, an annular guiding skirt 61 is arranged in longitudinal extension of the cylinder 7 such as to guide the upper sealing plate 21 in its movement. It may be either part of the cylinder 7or be made integral part of the spout element 29, hence essentially extending cylinder wall 8 at the end 13. The said guiding skirt may comprise several sections: a first closed section 63 of a height corresponding to the longitudinal piston movement needed to cover the venting holes 15 and the inlet opening 11; a second section extending the first one and comprising an opening 65 for pouring of liquid in correspondence with the orientation of the pouring spout and optionally also a venting orifice 67. The advantage of the first section 63 consists in that all openings of the cylinder 7 are being closed before liquid can flow out of the dosing system. The venting orifice 67 is advantageously provided for to prevent or at least reduce bubbling when liquid flows out of the dosing cylinder.

The spout element 29 comprises an external axially outwardly projecting pouring spout 71, an internal wall 73 provided with assembling means on its internal face for assembly, e.g. a threaded assembly, with the bottle neck 3. The spout element 29 may further comprise an external skirt 75 circumscribing said internal wall 73 at distance, thus adapting the outer appearance and shape of the spout element to the bottle 5 design and defining a shoulder 77. The guiding skirt 61,63 of the spout element, as described earlier above, together with the pouring spout 71 form a groove 79 among them for recovery of liquid that may have been spilled during pouring.

As mentioned with respect to the embodiment of Figures 1 and 2, the lever arm 35,36 pivoted in support 37 can take the shape of a clack valve that closes the pouring spout 71.

The spout element 29 may further be covered by a cap 81 advantageously retained on the said spout element 29 by means of a snap fitting 91. The closure cap advantageously further comprises an internal ring 87 projecting internally from the cover face 88 and having a diameter adapting to the pouring spout 71 for easy and handy centering of the closure cap on the spout element 29, more specifically the pouring spout 71 thereof. Preferably, the closure cap is made of a resilient material, such as a plastic material, more preferably a translucent plastic material, such as polyethylene or polypropylene.

The spout element 29 may be provided at the outer edge of the shoulder 79 with an upstanding tear off ring 89 (see Figure 6). Said ring may be fixed by way of regularly spaced breakable nips on the said shoulder. This ring 89 constitutes a tamper evidence means which prevents opening the dispensing closure by disassembling the cap, without breaking the ring 89.

The closure cap 81 and spout element 29 may further comprise child safety means. Such child safety means may comprise a dovetail type projection 91 arranged on the shoulder 77 of the spout element and showing away from such shoulder 77, and a corresponding snap element arranged in the wall 89 of closure cap 81 to advantageously form a snap fitting. When mounted on the spout element 29, the closure cap 81 is prevented from disassembling from the spout element 29, because blocked by the said snap fitting 91. The obstacle of the said snap fitting 91, preferably two opposite snap fittings 91, may be overcome by appropriate resilient deformation of the wall 89 of the closure cap 81. The resistance of the said wall 89 to deformation may be arranged in such a way that said pressure may not be exercised by a child.

The assembling of the spout element 29 with the neck 3 is preferably also protected by tamper evidence means. Such means may consist in breakable rings, snap assemblies or anti-screw-off ratchets, as known to the person skilled in the art.

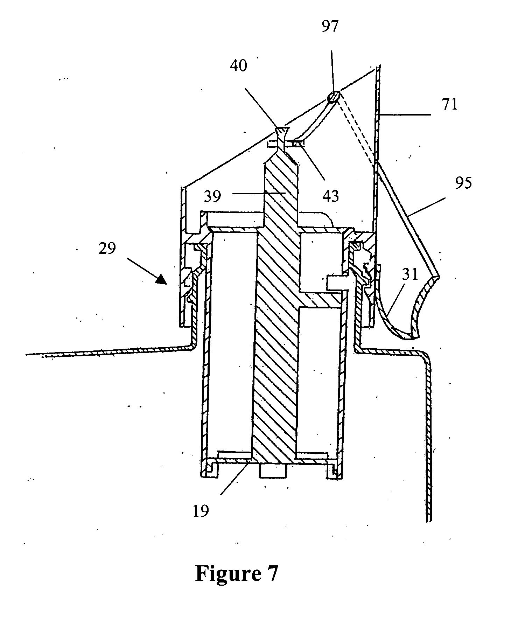

Figure 7 discloses yet another embodiment. In accordance with Figure 7, the piston is activated by a trigger 95 rather than a lever arm or clack-valve. The trigger essentially consists in an arm hinged on a pivot point 97 in the said pouring spout 71, or preferably in a fork extending outside on both sides of the said pouring spout 71 and hinged in two opposite pivot points 97, and fastened to the fork 43 which in turn is linked to the pin 40 of extension 39 of piston 19. Triggering the movement of the piston preferable should overcome the force of a spring means. Such spring means may be as described here above or a resilient material spring means 31 placed between the said trigger arm 95 and the spout element 29.

The different parts of the dispensing closure are preferably made of plastic materials and produced by injection molding. The tamper evidence ring may be blown integral with the spout element or may be made integral therewith after blowing. In order to facilitate the assembling of the dispensing closure as well as the arrangement thereof on the container neck, the closure cap, the spout element and the cylinder, or the closure cap and the combined spout element-cylinder may be preassembled, and the preassembled dispensing device may then be arranged on the container neck, when the container has been appropriately filled.

Such invention dispensing closure allows for easy dosing of a preset volume of liquid without major user exposure. As an example, In the case of glyphosate herbicide compositions intended for the Lawn and Garden market, the container may contain for instance 0.5 or 1 L of a concentrate glyphosate herbicide composition, e.g. a composition comprising 360 g/L glyphosate acid equivalent. The invention dispensing closure may be designed such as to dose sufficiently accurately and consistently 20 ml of concentrate liquid for dilution in a watering can. Should the user wish a more concentrate solution for treatment, a second or further doses may be diluted in the same can.

It is understood that the present invention is not restricted to the detailed description hereabove but that it extends to the scope of the invention as specified in the claims.

## Claims

1. A dispensing closure comprising:
- a cylinder (7) lodged in a sealing arrangement within the bottle neck (3) and comprising at least one inlet opening (11) at the end (13) directed towards the bottle neck (3), and at least one venting hole (15) at the end (17) directed towards the bottle (5) inside;
- a piston (19) comprising an upper sealing plate (21) and a lower sealing plate (23) linked by an essentially longitudinal shaft (25), said piston being arranged within the cylinder (7) in movable connection along the longitudinal axis of the said cylinder, hence defining a dosing volume delimited by the respective sealing plates (21,23) and the cylinder wall (8);
- said piston (19) further comprising a register (27) rigidly connected with said shaft (25) and being arranged at a distance from the lower sealing plate (23) such as to liberate or close the said inlet opening (11) simultaneously with the lower sealing plate (23), respectively, liberating or closing the venting hole (15);
- a spout element (29) extending the bottle neck (3) and facilitating pouring of liquid flowing out of the dosing cylinder (7);
a spring means (31) maintaining said upper sealing plate (21) in sealing arrangement with said cylinder (7), and allowing for movement of said piston (19) in unsealed position when operated.

2. The dispensing closure of Claim 1 **characterised in that** the spout element (29) and the cylinder (7) are made of a single piece.

3. The dispensing closure of any one of Claims 1 or 2 **characterised in that** the sealing arrangement of the cylinder (7) within the bottle neck (3) comprises a cylindrical seal (9) between the external face of the cylinder wall (8) and the internal face of the container neck (3), and an annular seal (10) between an external shoulder (14) of the cylinder (7) and the neck rim (4), said annular seal being maintained in sealing position by the assembly of the spout element (29) to the bottle neck (3).

4. The dispensing closure of Claim 3 **characterised in that** the seal comprise a ring of resilient material.

5. The dispensing closure of any of claims 1 to 4 **characterised in that** the spout element (29) is threaded onto the bottle neck (3).

6. The dispensing closure according to any one Claims 1 to, 5 **characterised in that** the spring means comprises a spring (31) acting between a support (33) solid with the spout element (29) and a lever arm (35) pivoting in support (37) solid with the spout element (29), thereby pressing by way of opposite lever arm (36) on an extension (39) of the piston shaft (25).

7. The dispensing closure according to any one of Claims 1 to 5 **characterised in that** the spring means comprises a spring (31) acting between a support (33) solid with the spout element (29) and the piston (19), preferably the upper sealing plate (21) of the piston (19).

8. The dispensing closure according to any one of Claims 1 to 7 **characterised in that** the lever arm (35,36) pivoting in the spout element (29) on an axis transversal to the longitudinal cylinder axis constitutes a clack valve closing the pouring spout (71) of spout element (29).

9. The dispensing closure according to any one of Claims 1 to 8 **characterised in that** the cylinder wall (8) comprises a conical section (6) directed toward the bottle inside, at the end (13) close to the bottle neck (3), and that the inlet opening (11) is arranged **in that** conical section (6).

10. The dispensing closure according to any one of Claims 1 to 9 **characterised in that** the register (27) consists in a chamber rigidly fixed to the shaft (25), defining approximately an angular sector designed to encompass inlet opening (11) in closed position.

11. The dispensing closure according to any one of Claims 1 to 10 **characterised in that** a guiding skirt (41,61) extends cylinder wall (8) at the end (13) close to the pouring spout (71) for gliding engagement of the upper sealing plate (21), said skirt comprising an opening (65) in correspondence with the orientation of the pouring spout (71).

12. The dispensing closure according to Claim 11 **characterised in that** the guiding skirt (61) comprises a first closed section (63) of a height corresponding to the longitudinal piston movement needed to cover the venting holes (15) and inlet opening (11), and a second section extending the first one, comprising the opening (65) and a venting orifice (67).

13. The dispensing closure according to any one of Claims 1 to 12 **characterised in that** it further comprises a cap covering the spout element (9).

14. The dispensing closure according to any one of Claims 1 to 13 **characterised in that** the spout element (29) comprises tamper evidence means.

15. The dispensing closure according to any one of Claims 1 to 14 **characterised in that** it comprises child safety means.
